# NEUE EUROPÄISCHE PATENTSCHRIFT

(11) **EP 1 832 156 B2**
(45) Veröffentlichungstag und Bekanntmachung des Hinweises auf die Entscheidung über den Einspruch: **26.06.2019**
(45) Hinweis auf die Patenterteilung: 06.07.2011
(21) Anmeldenummer: 07103031.6
(22) Anmeldetag: 26.02.2007
(51) Int. Cl.: A01F 15/08

(54) **Fahrzeug in der Art einer Rundballenpresse oder Ballenwickelvorrichtung**
Round baler or bale wrapping apparatus type vehicle
Véhicule de type presse à balles rondes ou dispositif pour emballer des balles

(30) Priorität: 10.03.2006 DE 102006011135
(43) Veröffentlichungstag der Anmeldung: 12.09.2007
(73) Patentinhaber: Deere & Company, Moline, IL 61265 (US)
(72) Erfinder: Guiet, Lionel, 70100, Gray (FR); Biziorek, Stéphane, 70600, Champlitte (FR)
(74) Vertreter: John Deere GmbH & Co. KG

(56) Entgegenhaltungen:
- EP-A- 1 145 619
- EP-A- 1 266 563

## Beschreibung

Die Erfindung betrifft Fahrzeug in der Art einer Rundballenpresse oder Ballenwickelvorrichtung. das rund-zvlindrische Ballen auf den Boden abgibt. Das Fahrzeug umfasst eine Steuereinrichtung mit einem Neigungssensor, der aus der Neigung des Fahrzeugs ein Signal bildet, das zum Positionieren des Fahrzeugs in Bezug auf die Fahrtrichtung bestimmt ist, derart, dass eine Ausrichtung des Fahrzeugs gefordert wird bzw. automatisch erfolgt, in der der Ballen so abgelegt wird, dass seine Dreh- oder Längsmittenachse der Hangneigung direkt folgt.

Die DE 199 10 555 A1 offenbart eine Rundballenpresse mit einer als Waage ausgebildeten Ablagevorrichtung für einen Rundballen. Dieser Ablagevorrichtung ist ein Neigungssensor zugeordnet, der aufgrund der Neigung verfälschte Wiegeergebniss e korrigiert.

Aus der EP 1 512 320 A2 geht eine Rundballenpresse hervor, die einen Rundballen auf den Boden ablegt, wobei der Austritt des Rundballens von einer zweiflügeligen Tür gebremst und seine Lage erforderlichenfalls korrigiert wird, so dass er keinen Hang hinunter rollen kann.

Die Vorrichtung nach der EP 1 266 563 weist einen Neigungssensor auf, der auf die Stellung von Trägem bzw. eines Wickeltisches wirkt, auf die ein Rundballen nach dem Pressvorgang abgegeben werden kann. Der Neigungssensor so II eine bessere Übergabe und spätere Ablage des Rundballens bewirken und richtet sich an der Neigung in der Fahrtrichtung aus.

Gemäß der EP 1 145 619 ist ein Mähdrescher mit einem Querneigunssensor versehen, der aus der Hangneigung quer zur Längsrichtung des Mähdreschers ein Signal bildet, mit dem die Stellung eines Schneidwerks der Hangneigung angepasst werden kann.

Das der Erfindung zugrunde liegende Problem wird darin gesehen, dass die Ablage eines Rundballens am Hang bei Neigungen in verschiedenen Richtungen nach wie vor eine schwierige Angelegenheit ist und die Vermeidung von Problemen nur mit sehr geschulten Bedienungspersonen gelingt oder dass ein auf dem Boden liegender Ballen zurecht gerückt werden muß und dabei beschädigt werden kann.

Dieses Problem wird erfindungsgemäß durch die Lehre des Patentanspruchs 1 gelöst, wobei in den weiteren Patentan sprüchen Merkmale aufgeführt sind, die die Lösung in vorteilhafter Weise weiterentwickeln.

Auf diese Weise wird erreicht, dass entweder ein Ballen so abgelegt wird, dass seine Dreh- oder Längsmittenachse der Hangneigung direkt folgt. Anders als im Stand der Technik braucht ein bis zu einer Tonne schwerer Ballen nicht auf dem Boden gedreht zu werden, was mit einer relativ leichten Presse ohnehin nur schwer möglich ist. Da der Ballen nicht gerückt wird, wird auch seine eventuell vorhandene Umhüllung (Netz, Folie) nicht beschädigt. Es kann auch nicht passieren, dass der Ballen einen Hang hinunter in die Rückseite der Presse hinein rollt, bevor seine Lage korrigiert wird. Der Neigungssensor ist vorzugsweise so ausgebildet, dass er die Hangneigung sowohl in der Fahrtrichtung als auch quer dazu ermitteln kann; er kann mechanisch, hydraulisch oder elektrisch ausgebildet sein, z.B. als eine Quecksilberwaage. Selbstverständlich können auch mehrere einfache in jeweils nur einer Richtung wirkende Neigungssensoren vorgesehen werden, die gemeinsam ein Signal bilden. Der Neigungssensor kann mit einem Dämpfungsglied versehen sein, das ungewollte Ausschläge aufgrund von Bodenunebenheiten vermeidet. Das Signal kann auf vielfältige Weise verwendet werden, angefangen von einer einfachen akustischen oder visuellen Führung einer Bedienungsperson bis zu einer vollständig automatischen Steuerung des Fahrzeugs in eine ungefährdete Stellung am Hang. Bei dem Fahrzeug kann es sich um ein selbstfahrendes oder ein gezogenes Fahrzeug handeln, z.B. eine Presse, einen Ballenwickler und dergleichen. Dazwischen liegt die Möglichkeit z.B. das Entladen des Ballens aus einem Pressraum zu vermeiden; wenn erkennbar ist, dass dies zu Schäden oder Betriebsstörungen führen könnte. Eine halb- oder vollautomatische Ablage des Ballens in einer ungefährdeten Lage wird ermöglicht, indem das Fahrzeug selbst verstellt werden kann. Die jeweils erforderliche Stellung, z.B. der Knickwinkel zwischen einer Rundballenpresse und einem Ballenwickler oder zwischen einem Zugfahrzeug und der Rundballenpresse, kann so verändert werden, dass schließlich der Ballen sicher abgelegt werden kann. Desgleichen kann auch eine Ablagevorrichtung so ausgerichtet werden, dass entweder die Rollachse des Ballens der Hangneigung folgt, oder dass der Ballen mit seiner Stirnfläche auf den Boden abgesetzt wird.

Die Verwendung einer akustischen oder visuellen Anzeigevorrichtung vergleichbar einer Einparkhilfe kann einer Bedienungsperson eine ausreichende Führung z.B. zum Ausrichten des Fahrzeugs am Hang geben. Sie kann aber auch ein Warnsignal aussenden, an dem die Bedienungsperson erkennt, dass sie jetzt und solange das Warnsignal anhält, keinen Ballen entladen darf. Verschiedene Alarmstufen können eingestellt werden, die z.B. davon abhängen, ob es in der Umgebung des Ablageorts besondere Risiken, wie etwa eine Straße, gibt. Die Anzeigevorrichtung kann Zeiger, Glühbirnen oder dergleichen oder einen Bildschirm enthalten.

Die Neigung des Fahrzeugs bzw. des Bodens, auf dem es steht, kann auch mittels GPS oder einem anderen satelitengestützten System ermittelt werden, so dass der Neigungssensor in einem Empfänger eines solchen Systems vorhanden ist, der die GPS-Daten empfängt und sie dem Rechner zuführt. Dies kann zu Einsparungen führen und früher ein Signal zur Verfügung stellen.

Ein Einbezug des Signals in die Steuerung des Betriebs des Fahrzeugs kann so aussehen, dass z. B die weitere Gutzufuhr unterbrochen wird, wenn festgestellt wird, dass ein Ballen nicht entladen werden kann und somit der Pressraum nicht weiter beschickt werden darf.

Anstatt die Neigung mittels eines Pendels oder dergleichen zu ermitteln, kann dies auch dadurch geschehen, dass an der Deichsel bzw. Anhängekupplung eine hangauf- oder hangabwärts gerichtete Bewegung des Fahrzeugs erkannt wird; oder es wird an den Rädern bzw. der Achse erkannt, dass ein Schub zur Seite, nämlich einen Hang hinunter vorliegt. Gegebenenfalls kann auch aus einer Kippbewegung eines Rahmens des Fahrzeugs gegenüber einer Tandemachse erkannt werden, dass hangauf- bzw. hangabwärts gefahren wird.

Wenn ein Rechner verwendet wird, der aus dem Signal ein Stellsignal für die Betätigungsvorrichtung bildet, besteht die Möglichkeit, dieses Signal zu bearbeiten, z.B. zu verstärken, zu verzögern, abhängig von anderen Werten zu verändern etc.. Bei dem Rechner kann es sich um einen Bordcomputer auf einem Zugfahrzeug oder auf dem Fahrzeug selbst handeln.

Die Steuereinrichtung kann außer für die sichere Ablage des Ballens auch dazu benutzt werden, einen Wert über das Gewicht des Ballens abhängig von der Neigung zu korrigieren.

Rundballenpressen und Ballenwickelvorrichtungen werden vielfach an Hängen und Neigungen eingesetzt; um deren Leistung zu erhöhen, und um sie eventuell gar als Non-Stop-Geräte einsetzen zu können, wird eine zuvor beschriebene Steuereinrichtung eingesetzt.

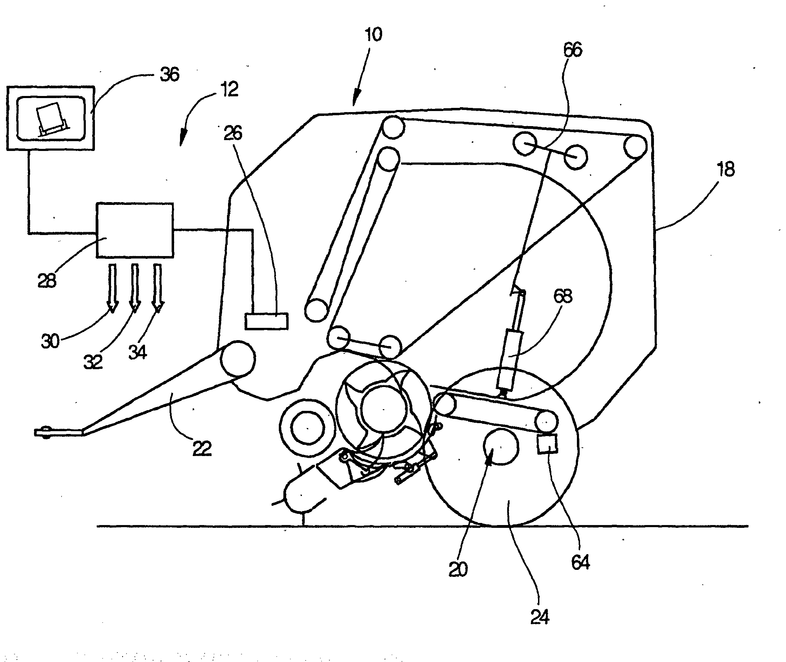

In der Zeichnung ist ein nachfolgend näher beschriebenes Ausführungsbeispiel der Erfindung anhand eines Fahrzeugs mit einer Steuereinrichtung dargestellt.

Ein in der einzigen Figur gezeigtes Fahrzeug 10 ist dort als eine Rundballenpresse dargestellt, die an ein nicht gezeigtes Zugfahrzeug angeschlossen werden kann, das mit einer Steuereinrichtung 12 versehen ist und einen rund-zylindrischen Ballen bildet, der durch Öffnen einer Auslassvorrichtung 66 auf den Boden abgelegt werden kann.

Das Fahrzeug 10 weist außer einer Vielzahl für die Erfindung unbedeutender Komponenten einen Rahmen 18, ein Fahrgestell 20, eine Deichsel 22 und die Auslassvorrichtung 66 auf.

Der Rahmen 18 ruht auf dem Fahrgestell 20 und trägt vorne die Deichsel 22.

Das Fahrgestell 20 stützt sich mit Rädern 24 auf dem Boden ab und folgt einer quer zur Fahrtrichtung verlaufenden Neigung des Bodens, falls diese vorhanden ist. Da auf jeder Seite nur ein oder eventuell zwei Räder 24 vorhanden sind, kann das Fahrgestell 20 um eine gedachte horizontale Achse geschwenkt werden und somit mehr oder weniger steil an dem Hang stehen. Die Räder 24 oder das Fahrgestell 20 als Ganzes könnten gegenüber dem Rahmen 18 lenkbar angebracht sein.

Die Deichsel 22 kann um eine vertikale Achse im Anschlussbereich des Zugfahrzeugs schwenken und somit fluchtend oder nicht fluchtend zu dem Zugfahrzeug ausgerichtet werden.

Die Auslassvorrichtung 66 ist als sogenanntes Gatter, Auslaßklappe oder dergleichen ausgebildet und kann in eine angehobene Stellung gebracht werden, in der ein gebildeter Ballen das Fahrzeug 10 verlassen kann. Hierzu ist eine hydraulisch aktivierbare Betätigungsvorrichtung 68 normalerweise auf jeder Seite des Fahrzeugs 10 vorgesehen.

Die Steuereinrichtung 12 enthält unter anderem einen Neigungssensor 26, einen Rechner 28, eine Anzeigevorrichtung 36 und die Betätigungsvorrichtung 68, bzw. ein dazugehöriges Schaltventil, die untereinander drahtlos oder mit Leitungen verbunden sind. Es ist die Aufgabe der Steuereinrichtung 12, zu erkennen, in welcher räumlichen Beziehung sich das Fahrzeug 10 an einem Hang befindet, und das Fahrzeug 10 bzw. die Auslassvorrichtung 66 so zu steuern, dass der Ballen in einer Situation abgelegt wird, in der er nicht einen Hang hinunter rollt.

Der Neigungssensor 26 kann z.B. als eine Quecksilberwaage ausgebildet sein und erkennt, in welchen Richtungen das Fahrzeug 10 gegenüber einer absoluten Lage geneigt ist. Der Neigungssensor 26 bildet ein Signal, vorzugsweise ein elektronisches, aus dem erkennbar ist, ob das Fahrzeug 10 in der Quer- und/oder der Längsrichtung geneigt ist und zu welchem Grad. Ein nicht gezeigtes Dämpfungsglied wird dafür sorgen, dass Lageänderungen aufgrund von Bodenunebenheiten nicht ins Gewicht fallen. Die Hangneigung könnte auch von anderen Faktoren abgeleitet werden, z.B. von Kräften an der Deichsel 22, von den Seitenkräften auf die Räder 24, insbesondere bei einer Tandemachse, und dergleichen.

Der Rechner 28 ist als ein Bordcomputer auf dem Zugfahrzeug oder als Rechner 28 an dem Fahrzeug 10 selbst ausgebildet und angebracht. CAN-Bus-Technik kann zur Signalübertragung verwendet werden. In dem Rechner 28 wird das Signal des Neigungssensors 26 verarbeitet, d.h. z.B. verstärkt, mit anderen Signalen verknüpft, und daraus ein Ausgangssignal gebildet, z.B. für eine Anzeige auf der Anzeigevorrichtung 36 oder einen akustischen Alarm. Ein anderes Ausgangssignal wird für die Stellungsänderung der Betätigungsvorrichtung 68 gebildet, wozu z.B. nicht gezeigte Elektrohydraulikventile gesteuert werden. Der Rechner 28 kann mit einer Eingabevorrichtung, z.B. einer Tastatur, einem Touchscreen, einer Voice-Control und dergleichen versehen werden, damit eine Bedienungsperson die Signalverarbeitung beenden oder aktivieren und beeinflussen kann. Das von dem Rechner 28 gebildete Signal kann derart ausgebildet sein, dass die Betätigungsvorrichtung 68 nur dann den Ballen ablegen, bzw. sich das Fahrzeug 10 bei der Anlage des Ballens sich in einer Lage befindet, die verhindert, dass er den Hang hinunter rollt. Der Rechner 28 kann auch an eine Wiegevorrichtung 64 angeschlossen werden, deren Signal korrigiert wird, damit Einflüsse aufgrund der Hangneigung ausgeschlossen werden.

Die Anzeigevorrichtung 36 kann ein einfacher Zeiger sein, ein Echtbild mit einer Anzeige einer kritischen und/oder einer unkritischen Stellung des Fahrzeugs 10 oder der Auslassvorrichtung 66, ein graphisches Display, das Lenkhinweise gibt, etc.; sie befindet sich vorzugsweise auf dem Zugfahrzeug und ist mit dem Rechner 28 verbunden.

Die Betätigungsvorrichtung 68 ist als Hydraulikmotor oder als Elektromotor ausgebildet und wird je nach den Anforderungen in einer oder in beiden Richtungen mit Fremdkraft verstellt. Die Betätigungsvorrichtung 68 kann auch intern mit einem Stellungssensor, als sogenannter aktiver Zylinder, versehen sein.

Der Ballen ist rund-zylindrisch ausgebildet und weist eine Stirnseite und eine Umfangsfläche auf; der Durchmesser kann bis zu 1,8 bis 2 Meter betragen. Der Ballen kann unmittelbar nach dem Verlassen des Fahrzeugs 10 auf den Boden abgelegt oder davor einer angehängten oder angebauten Folienwickelvorrichtung aufgegeben werden, wo er zur Silagebildung eingewickelt wird. Wenn die Folienwickelvorrichtung angehängt ist, kann eine weitere nicht gezeigte Betätigungsvorrichtung vorgesehen werden, die den Winkel zwischen dem Fahrzeug 10, z.B. der Rundballenpresse, und der dann auf eigenen Rädern abgestützten und lenkbaren Folienwickelvorrichtung beeinflusst.

Selbstverständlich sind in der Steuereinrichtung 12 Leitungen, Stromquellen etc. vorgesehen, die aber weder gezeichnet noch beschrieben sind, weil sie sich von selbst ergeben.

Nach alledem ergibt sich folgende Funktion.

Während des Betriebs erstellt der Neigungssensor 26 ein Signal, das er an den Rechner 28 weiterleitet und aus dem dieser erkennt, in welcher Lage sich das Fahrzeug 10 gegenüber einer auf den Erdmittelpunkt gerichteten Linie befindet. Beispielsweise ist das Fahrzeug 10 zur Seite geneigt, wenn eine durch die Räder 24 des Fahrgestells 20 verlaufende Drehachse einer Hangneigung folgt oder nach vorne bzw. hinten gekippt, wenn das Fahrzeug 10 einen Hang hinauf oder hinab gefahren wird. Selbstverständlich kann das Fahrzeug 10 auch in beiden Richtungen geneigt sein. Bei jeder Neigung besteht die Gefahr, dass ein Ballen nach seiner Ablage auf dem Boden den Hang hinunter rollt.

Der Rechner 28 erstellt ein Signal, das:
eine Anzeige auf der Anzeigevorrichtung 36 erstellt.

Im Falle der Anzeige auf der Anzeigevorrichtung 36 wird entweder nur eine Warnanzeige gegeben oder eine Positionierung des Fahrzeugs 10 gefordert, die außerhalb des kritischen Ablagebereichs für den Ballen liegt. Hierfür können Töne unterschiedlicher Frequenz ausgesandt oder mittels Anzeigen dargestellt werden, in welcher Beziehung sich das Fahrzeug zu dem gefährdeten Bereich befindet und wie es in einen ungefährdeten Bereich gebracht werden kann.

Wenn der Rechner 28 nur eine Entladung des Ballens aus dem Fahrzeug 10 verhindern soll, wird eine Aktivierung der Betätigungsvorrichtung 68 unterbunden.

In dem Falle, dass eine halb- oder vollautomatische Steuerung oder Regelung der Betätigungsvorrichtung 68 erfolgen soll, sieht dies so aus, dass eine Entladung des Ballens verhindert wird, solange er nach dem Austritt aus dem Preßraum wegrollen könnte, dass aber eine Aktivierung der Betätigungsvorrichtung 68 automatisch dann erfolgt, wenn die Umstände eine Endladung zulassen, oder dass ein akustischer oder visueller Hinweis gegeben wird, sobald ein sicheres Entladen möglich ist.

Die Anzeigevorrichtung 36 ist auch so aktivierbar, dass sie eine Bedienungsperson anleitet, das Fahrzeug 10 so am Hang manuell auszurichten, dass der Ballen entlader werden kann oder eine nicht gezeigte Betätigungsvorrichtung verstellt, die zu einer solchen Positionierung automatisch führt, wozu z.B. eine Knickdeichsel oder dergleichen verwendet würde.

## Patentansprüche

1. Fahrzeug in der Art einer Rundballenpresse oder Ballenwickelvorrichtung, das rund-zylindrische Ballen auf den Boden abgibt,
mit einer Steuereinrichtung (12) mit einem Neigungssensor (26),
der aus der Neigung des Fahrzeugs (10) ein Signal bildet, das zum Positionieren des Fahrzeugs (10) in Bezug auf die Fahrtrichtung bestimmt ist, derart, dass eine Ausrichtung des Fahrzeugs gefordert wird bzw. automatisch erfolgt, in der der Ballen so abgelegt wird, dass seine Dreh- oder Längsmittenachse der Hangneigung direkt folgt

2. Fahrzeug nach Anspruch 1, **dadurch gekennzeichnet, dass** die Steuereinrichtung (12) eine akustische oder visuelle Anzeigevorrichtung (36) enthält, die abhängig von dem Signal betrieben wird.

3. Fahrzeug nach Anspruch 1 oder 2, **dadurch gekennzeichnet, dass** der Neigungssensor (26) in ein satelitengesteuertes Lenksystem des Fahrzeugs (10) oder eines diesem vorgespannten Zugfahrzeugs integriert ist.

4. Fahrzeug nach einem oder mehreren der vorherigen Ansprüche, **dadurch gekennzeichnet, dass** das Signal in die Steuerung des Betriebs des Fahrzeugs (10) mit einbezogen wird.

5. Fahrzeug nach einem oder mehreren der vorherigen Ansprüche, **dadurch gekennzeichnet, dass** das Signal aus der Beziehung eines Zugfahrzeugs zu dem Fahrzeug (10) oder aus Relativbewegungen an dem Fahrzeug (10) gebildet wird.

## Claims

1. Round bale press or wrapping-type baler type vehicle which outputs cylindrical bales onto the ground, having a controller (12) with an inclination sensor (26) which forms a signal from the inclination of the vehicle (10) and is intended for positioning the vehicle (10) with respect to the direction of travel in such a way that an alignment of the vehicle is required or automatically occurs, in which the bale is laid down such that its rotary or central longitudinal axis directly follows the slope gradient.

2. Vehicle according to Claim 1, **characterized in that** the controller (12) contains an acoustic or visual display device (36) which is operated independently of the signal.

3. Vehicle according to Claim 1 or 2, **characterized in that** the inclination sensor (26) is integrated into a satellite-controlled steering system of the vehicle (10) or of a traction vehicle to which said vehicle (10) is hitched.

4. Vehicle according to one or more of the preceding claims, **characterized in that** the signal is also included in the control of the operation of the vehicle (10) .

5. Vehicle according to one or more of the preceding claims, **characterized in that** the signal is formed from the relationship between a traction vehicle and the vehicle (10) or from relative movements at the vehicle (10) .

## Revendications

1. Véhicule de type presse à ballots ronds au dispositif d'enroulement de ballots qui dépose sur le sol des ballots cylindriques ronds, comprenant un dispositif de commande (12) avec un détecteur d'inclinaison (26) qui forme un signal à partir de l'inclinaison du véhicule (10), lequel est conçu pour positionner le véhicule (10) par rapport au sens de déplacement de telle sorte qu'un alignement du véhicule au cours duquel le ballot est déposé de manière à ce que son axe de rotation ou axe longitudinal médian suive directement la déclivité, soit demandé ou se fasse automatiquement.

2. Véhicule selon la revendication 1, **caractérisé en ce que** le dispositif de commande (12) contient un dispositif indicateur (36) sonore ou visuel, dont le fonctionnement dépend du signal.

3. Véhicule selon la revendication 1 ou 2, **caractérisé en ce que** le détecteur d'inclinaison (26) est intégré dans un système de direction commandé par satellite du véhicule (10) ou d'un véhicule tracteur auquel il est attelé.

4. Véhicule selon une ou plusieurs des revendications précédentes, **caractérisé en ce que** le signal est inclus dans la commande de fonctionnement du véhicule (10).

5. Véhicule selon une ou plusieurs des revendications précédentes, **caractérisé en ce que** le signal est formé à partir de la relation entre un véhicule tracteur et le véhicule (10) ou à partir des mouvements relatifs sur le véhicule (10).
